(19) **Europäisches Patentamt European Patent Office Office européen des brevets**

(11) **EP 4 395 398 B1**

(12) **FASCICULE DE BREVET EUROPEEN**

(45) Date de publication et mention de la délivrance du brevet:
**16.07.2025  Bulletin 2025/29**

(21) Numéro de dépôt: **23220306.7**

(22) Date de dépôt: **27.12.2023**

(51) Classification Internationale des Brevets (IPC):
*H04W 16/18* (2009.01)     *G06N 20/00* (2019.01)
*G06T 15/06* (2011.01)     *H04B 17/391* (2015.01)
*H04B 17/12* (2015.01)

(52) Classification Coopérative des Brevets (CPC):
**H04W 16/18; H04B 17/12; H04B 17/3912**

(54) **PROCÉDÉ DE DÉTERMINATION D'UNE COUVERTURE RÉSEAU EN AU MOINS UN POINT DE CONTRÔLE COMPRIS DANS UN ENVIRONNEMENT ET DISPOSITIF ÉLECTRONIQUE DE DÉTERMINATION ASSOCIÉ**

VERFAHREN ZUR BESTIMMUNG EINER NETZWERKABDECKUNG IN MINDESTENS EINEM KONTROLLPUNKT IN EINER UMGEBUNG UND ZUGEHÖRIGE ELEKTRONISCHE BESTIMMUNGSVORRICHTUNG

METHOD FOR DETERMINING A NETWORK COVERAGE AT AT LEAST ONE CONTROL POINT IN AN ENVIRONMENT AND ASSOCIATED ELECTRONIC DETERMINATION DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **27.12.2022  FR 2214533**

(43) Date de publication de la demande:
**03.07.2024  Bulletin 2024/27**

(73) Titulaire: **THALES**
**92190 Meudon (FR)**

(72) Inventeurs:
• **BONNE, Jean-Benoit**
**91767 PALAISEAU CEDEX (FR)**
• **DUQUEROIE, Bertrand**
**91767 PALAISEAU CEDEX (FR)**
• **HUBERT, William**
**91767 PALAISEAU CEDEX (FR)**

(74) Mandataire: **Lavoix**
**2, place d'Estienne d'Orves**
**75441 Paris Cedex 09 (FR)**

(56) Documents cités:
**US-A1- 2015 333 849**

**Description**

La présente invention concerne un procédé de détermination d'une couverture réseau en au moins un point de contrôle. La présente invention concerne également un produit programme d'ordinateur et un dispositif électronique de détermination propres à mettre en oeuvre un tel procédé.

La présente invention concerne le domaine de la détermination d'une couverture réseau.

Dans le domaine des drones pilotés à distance dans un environnement, il est connu de transmettre aux drones, des commandes de pilotage par un signal électromagnétique, de préférence un signal radio, depuis une ou plusieurs antennes émettrices.

Pour s'assurer que les drones soient pilotables en tout point de l'environnement, il est préférable de vérifier au préalable qu'en tout point de l'environnement, une couverture réseau est suffisante.

On entend par « couverture réseau en un point » une puissance des signaux électromagnétiques émis depuis la ou les antennes émettrices et reçus en ce point.

La couverture réseau en un point est notamment influencée par la longueur du chemin parcouru par les signaux électromagnétiques depuis l'antenne émettrice, jusqu'à ce point.

En outre, dans le contexte d'un environnement présentant des obstacles, les signaux électromagnétiques se réfléchissent sur lesdits obstacles. Ainsi, la longueur du chemin parcouru par chaque signal ne dépend pas uniquement de la distance entre l'antenne émettrice et le point, mais également par les réflexions desdits signaux sur les obstacles.

Ainsi, il est connu de modéliser une trajectoire des signaux électromagnétiques par des rayons formant respectivement une ligne brisée dans laquelle une brisure est effectuée à chaque réflexion. Les directions des brisures sont par exemple calculées avec les lois de Snell-Descartes. On comprend alors que plusieurs rayons partant de l'antenne émettrice sont propres à atteindre un même point en se réfléchissant respectivement sur des obstacles distincts.

Par la suite, la couverture réseau au point peut être théoriquement déterminée en combinant les contributions de chaque rayon atteignant ledit point.

Cependant, lorsque l'on souhaite effectuer une détermination numérique d'une couverture réseau dans un environnement, il n'est pas possible de tester tous les points de l'environnement qui représenteraient alors une infinité de possibilités.

Il est notamment connu de l'article "Shooting and Bouncing Rays: Calculating the RCS of an Arbitrarily Shaped Cavity" de LING, H ; CHOU, R-C ; LEE, S-W publié dans le IEEE Transactions on Antennas and Propagation, de choisir des points de contrôle et d'émettre numériquement des rayons depuis l'antenne émettrice, selon différentes directions.

Ensuite, pour chaque point de contrôle, la distance entre chaque rayon et le point de contrôle est mesurée. Lorsque la distance associée à un rayon, est inférieure à un seuil dont une valeur est de l'ordre de l'approximation numérique, il est considéré que le rayon atteint le point de contrôle.

Puis, la couverture réseau à chaque point de contrôle est déterminée par combinaison des contributions des rayons considérés comme atteignant le point de contrôle.

Cependant, avec un tel procédé, la propagation d'approximations numériques implique que le seuil soit proportionnel à la distance entre l'antenne émettrice et le point de contrôle considéré.

Ainsi, l'hypothèse selon laquelle les rayons dont la distance au point de contrôle est inférieure au seuil sont considérés comme atteignant le point de contrôle, ne fonctionne que pour les points de contrôle proches de l'antenne émettrice.

Le procédé de l'état de la technique permet donc uniquement de déterminer la couverture réseau dans un petit environnement, e.g. de l'ordre de grandeur d'une rue.

Dans le contexte précité du déploiement de drones dans un environnement plus vaste, e.g. de l'ordre de grandeur d'une région, le procédé de l'état de la technique n'est donc pas applicable.

US 2015/0333849 A1 divulgue un procédé d'estimation de l'intensité du champ électrique associé à une onde radio émise par une source électromagnétique d'un réseau de communication radio cellulaire à l'intérieur d'une zone. Le procédé comprend : l'identification d'un ensemble d'obstacles ; la détermination d'au moins un des éléments suivants : un polygone de visibilité directe des points en ligne de vue avec la source ; un polygone de visibilité par réflexion des points pouvant être atteints par l'onde après réflexion par les obstacles ; un polygone de visibilité par diffraction des points pouvant être atteints par l'onde après diffraction par les obstacles. Les polygones de visibilité sont associés aux valeurs respectives du champ électrique qui y sont calculées. Le procédé comprend en outre : la subdivision de la zone en pixels ; pour chaque pixel, la détermination de l'appartenance à au moins un des polygones de visibilité ; et dans l'affirmative, la détermination de l'intensité du champ électrique au niveau du pixel comme une valeur proportionnelle au champ électrique calculé au niveau d'au moins un polygone de visibilité.

La présente invention propose donc un procédé de détermination d'une couverture réseau qui s'applique à tout type d'environnement.

A cet effet, la présente invention a pour objet un procédé de détermination d'une couverture réseau en au moins un point de contrôle compris dans un environnement, l'environnement comprenant au moins une antenne émettrice d'un signal électromagnétique, le procédé étant mis en œuvre par un dispositif électronique de détermination et comprenant les étapes suivantes :

- obtention d'un modèle de l'environnement, le modèle comprenant des obstacles propre à réfléchir le signal électromagnétique, l'antenne émettrice et le point de contrôle,
  chaque obstacle étant formé d'une pluralité de parties d'obstacle,
- détermination d'une trajectoire propre à chacun d'une pluralité de rayons initiaux, chaque rayon initial étant émis depuis l'antenne émettrice, dans le modèle de l'environnement, selon une direction d'émission respective, au moins un parmi la pluralité de rayons initiaux étant réfléchi sur au moins une partie d'obstacle,
- pour le ou chaque rayon initial dont la trajectoire respecte une contrainte associée au ou à un des points de contrôle, calcul pour le ou l'un desdits points de contrôle, d'une trajectoire d'un rayon corrigé passant par ledit point de contrôle et par l'antenne émettrice,
  la trajectoire de chaque rayon corrigé comprenant une direction d'émission corrigée,
- stockage du ou d'au moins une partie des rayons corrigés et de leur trajectoire respective, dans une base de données cumulées,
- pour chaque point de contrôle, si la base de données cumulées comprend plusieurs rayons corrigés dont des directions d'émission corrigées sont sensiblement identiques, sélection d'uniquement un desdits rayons corrigés, et
- détermination de la couverture réseau au ou à chaque point de contrôle par application, aux rayons sélectionnés de la base de données cumulées, d'un modèle de pertes dans les signaux électromagnétiques,
  le modèle de pertes dépendant du nombre de rayons sélectionnés atteignant le point de contrôle, d'une longueur de la trajectoire de chaque rayon sélectionné et d'un nombre de réflexions dans la trajectoire de chaque rayon sélectionné.

Grâce au calcul des trajectoires de rayon corrigés, il est possible de s'affranchir des problématiques de mise à l'échelle, inhérentes au procédé de l'état de la technique.

Selon des modes de réalisation préférentielles, le procédé selon l'invention comprend une ou plusieurs des caractéristiques suivantes, prises isolément ou suivant toutes les combinaisons techniquement possibles :

- le procédé comprenant entre l'étape d'obtention et l'étape de détermination de trajectoires :

  ◦ une étape de définition de plusieurs surfaces maillées dans l'environnement, chaque surface maillée présentant un pavage de cellules, chaque cellule étant délimité par un nombre N de côtés et par N sommets, chaque sommet étant un point de contrôle, et
  ◦ une étape de chargement d'une surface maillée parmi les surfaces maillées

  lors de l'étape de calcul, la contrainte associée à chaque point de contrôle étant que le rayon atteigne une cellule dont un sommet est ledit point de contrôle, les surfaces maillées étant de préférence planes et préférentiellement encore parallèles entre elles ;
- les étapes de chargement, de détermination de trajectoires, de calcul de rayon(s) corrigé(s), de stockage et de sélection sont itérées pour chacune des surfaces maillées ;
- chaque surface maillée est divisée en un nombre prédéfini de quadrants, chaque point de contrôle appartenant à un des quadrants,
  lors de l'étape de stockage, le quadrant associé au point de contrôle de chaque rayon corrigé étant également stockée dans la base de données cumulées, et l'étape de sélection étant effectuée successivement pour chaque quadrant de la base de données cumulées ;
- pour au moins un rayon initial respectant la contrainte associée au ou à un des points de contrôle, aucun rayon corrigé correspondant ne relie l'antenne émettrice et ledit point de contrôle,
  lors de l'étape de calcul, pour ce rayon initial et pour ce point de contrôle, aucun rayon corrigé n'étant alors calculé ;
- les étapes de détermination de trajectoires, de calcul de rayon(s) corrigé(s), de stockage et de sélection sont itérées plusieurs fois,

  les directions d'émission des rayons initiaux émis lors de l'étape de détermination de trajectoires étant distinctes d'une itération à une autre,
  préférentiellement, les étapes de détermination de trajectoires, de calcul, de stockage et de sélection sont itérées jusqu'à ce qu'un critère soit atteint,
  le critère étant que:

  ◦ le nombre d'itération est égal à un seuil, et/ou
  ◦ un rapport entre le nombre de rayons sélectionnés lors de l'étape de sélection et le nombre de rayons dans la base de données cumulées est supérieur ou égal à un autre seuil ;

- le modèle de pertes est tel que la couverture réseau au ou à un des points de contrôle est égale à une somme de contributions, chaque contribution étant associée à un rayon sélectionné de la base de données cumulées, chaque contribution étant une puissance du rayon sélectionné, inversement proportionnelle à la distance parcourue par ledit rayon sélectionné depuis l'antenne émettrice, et fonction du nombre de réflexions dudit rayon sélectionné sur des parties d'obstacle ; et
- le dispositif électronique de détermination comprend au moins une carte graphique, les étapes de détermination de trajectoires et de calcul étant mises oeuvre par la ou les cartes graphiques.

La présente invention a également pour objet un produit programme d'ordinateur comprenant des instructions logicielles, qui lorsqu'elles sont exécutées par un ordinateur, mettent en oeuvre un tel procédé de détermination.

La présente invention a également pour objet un dispositif électronique de détermination d'une couverture réseau en au moins un point de contrôle compris dans un environnement, l'environnement comprenant au moins une antenne émettrice d'un signal électromagnétique, le dispositif électronique de détermination comprenant :

- un module d'obtention propre à obtenir un modèle de l'environnement, le modèle comprenant des obstacles propre à réfléchir le signal électromagnétique, l'antenne émettrice et le point de contrôle,
  chaque obstacle étant formé d'une pluralité de parties d'obstacle,
- un premier module de détermination propre à déterminer une trajectoire propre à chacun d'une pluralité de rayons initiaux, chaque rayon initial étant émis depuis l'antenne émettrice, dans le modèle de l'environnement, selon une direction d'émission respective, au moins un parmi la pluralité de rayons initiaux étant réfléchi sur au moins une partie d'obstacle,
- un module de calcul propre à calculer, pour le ou chaque rayon initial dont la trajectoire respecte une contrainte associée au ou à un des points de contrôle, pour le ou l'un desdits points de contrôle, une trajectoire d'un rayon corrigé passant par ledit point de contrôle et par l'antenne émettrice,
  la trajectoire de chaque rayon corrigé comprenant une direction d'émission corrigée,
- un module de stockage propre à stocker le ou au moins une partie des rayons corrigés et de leur trajectoire respective, dans une base de données cumulées,
- un module de sélection propre à sélectionner, pour chaque point de contrôle, si la base de données cumulées comprend plusieurs rayons corrigés dont des directions d'émission corrigées sont sensiblement identiques, uniquement un desdits rayons corrigés, et
- un deuxième module de détermination propre à déterminer la couverture réseau au ou à chaque point de contrôle par application, aux rayons sélectionnés de la base de données cumulées, d'un modèle de pertes dans les signaux électromagnétiques,

le modèle de pertes dépendant du nombre de rayons sélectionnés atteignant le point de contrôle, d'une longueur de la trajectoire de chaque rayon sélectionné et d'un nombre de réflexions dans la trajectoire de chaque rayon sélectionné.

D'autres caractéristiques et avantages de l'invention apparaîtront à la lecture de la description qui suit de modes de réalisation de l'invention, donnés à titre d'exemple uniquement et en référence aux dessins qui sont :

- la figure 1 est une vue schématique d'un dispositif électronique de détermination selon l'invention ;

- la figure 2 est un schéma explicatif d'une étape mise en œuvre par le dispositif électronique de détermination de la figure 1 ;

- la figure 3 est un schéma explicatif d'une étape mise en œuvre par le dispositif électronique de détermination de la figure 1 ;

- la figure 4 est un schéma explicatif d'une étape mise en œuvre par le dispositif électronique de détermination de la figure 1 ;

- la figure 5 est un schéma explicatif d'une étape mise en œuvre par le dispositif électronique de détermination de la figure 1 ; et

- la figure 6 est une organigramme d'un procédé de détermination mis en œuvre par le dispositif électronique de la figure 1.

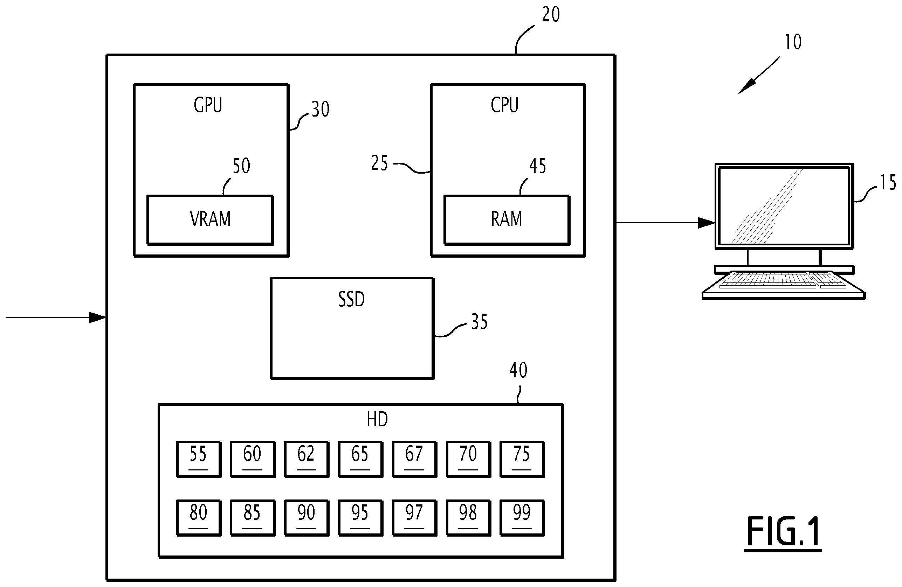

Sur la figure 1 est représenté un dispositif électronique 10 de détermination d'une couverture réseau en au moins un point de contrôle Pc compris dans un environnement.

Comme représenté sur la figure 1, le dispositif de détermination 10 comprend par exemple un écran d'affichage 15 et une unité de traitement 20.

L'écran d'affichage 15 est propre à afficher un contenu reçu depuis l'unité de traitement 20.

L'unité de traitement 20 est par exemple un ordinateur. L'unité de traitement 20 comprend alors préférentiellement un processeur 25, une carte graphique 30, un disque électronique 35 et un disque dur 40.

Le processeur 25, aussi appelé CPU (de l'anglais *Central Processing Unit*) est propre à exécuter des fonctions logicielles. Le processeur 25 comprend préférentiellement une mémoire vive 45, aussi appelée mémoire RAM (de l'anglais *Random Access Memory*) propre à stocker temporairement, ou transitoirement, des données issues de l'exécution de fonctions logicielles par ledit processeur 25.

La carte graphique 30, aussi appelée GPU (de l'anglais *Graphics Processing Unit*) est également propre à implémenter des fonctions logicielles. Préférentiellement, la carte graphique 30 comprend une mémoire vidéo 50, aussi appelée mémoire VRAM (de l'anglais *Video Random Access Memory*). Bien que la mémoire vidéo 50 soit initialement prévue pour stocker temporairement, ou transitoirement, des données vidéos calculées par la carte graphique 30, son utilisation peut être détournée pour stocker temporairement, ou transitoirement, tout type de données issues de fonctions logicielles exécutées par la carte graphique 30, comme c'est le cas dans la présente invention.

Le disque électronique 35, aussi appelé disque SSD (de l'anglais *Solid-State Drive*), disque statique à semi-conducteurs, ou encore disque à semi-conducteurs, est propre à stocker des données, par exemple organisées sous la forme d'une base de données comme il sera décrit ci-après. La quantité de données propres à être stockées dans le disque électronique 35 est plus élevée que la quantité de données propres à être stockées dans la mémoire vive 45 et dans la mémoire vidéo 50.

En outre, le disque électronique 35 est une mémoire non-volatile, contrairement aux mémoires vive 45 et vidéo 50. Ainsi, suite à une mise hors-tension de l'unité de traitement 20, les données stockées dans le disque électronique 35 sont conservées en mémoire contrairement à celles présentes dans la mémoire vive 45 et dans la mémoire vidéo 50.

Le disque électronique 35 est connecté au processeur 25 et à la carte graphique 30 en particulier. Le disque électronique 35 est propre à stocker, non-transitoirement, des données provenant de la mémoire vive 45 du processeur 25, et/ou de la mémoire vidéo 50 de la carte graphique 30. Le disque électronique 35 est en outre propre à fournir des données stockées en son sein, à chacune des mémoires vive 45 et vidéo 50.

Le disque dur 40, aussi appelé disque HD (de l'anglais *Hard Drive*) est un disque physique propre à stocker, non-transitoirement, des données. Le disque dur 40 est également connecté au processeur 25 et à la carte graphique 30. Le disque dur 40 est propre à échanger des données avec la mémoire vive 45 et la mémoire vidéo 50.

Le disque dur 40 présente une capacité de stockage supérieure à celle d'un disque électronique 35 de coût équivalent. Cependant, la vitesse d'échange de données entre le disque dur 40 et chacun du processeur 25 et de la carte graphique 30 est plus faible que la vitesse d'échange de données entre le disque électronique 35 et chacun du processeur 25 et de la carte graphique 30.

Préférentiellement, le disque dur 40 stocke une pluralité de modules logiciels.

Chaque module logiciel stocké dans le disque dur 40 comprend des instructions logicielles propres à être exécutées par le processeur 25 ou par la carte graphique 30.

En particulier, le disque dur 40 stocke un module d'obtention 55 propre à être exécuté par le processeur 25 afin d'obtenir un modèle d'un environnement. L'environnement est par exemple une ville. L'environnement comprend alors des obstacles par exemple formés par les bâtiments de la ville ainsi que toute autre infrastructure naturelle ou artificielle.

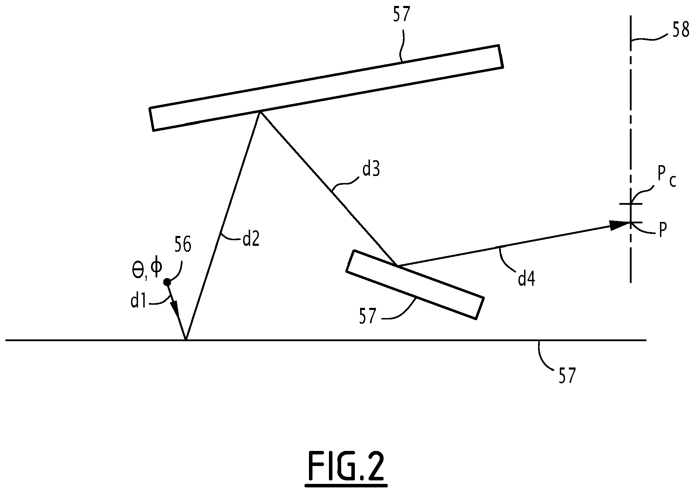

Chacune des infrastructures forme donc un obstacle propre à partiellement réfléchir, et partiellement absorber, tous signaux électromagnétiques qui l'atteint. L'environnement comprend préférentiellement en outre un sol et une antenne émettrice 56 visible sur la figure 2. Le sol de l'environnement est par exemple plan ou courbé. Dans le cas d'un plan courbé, ledit plan est par exemple issu d'une projection du type Mercator ou Lambert 93.

On entend par « signal électromagnétique » un rayonnement électromagnétique.

Dans le modèle de l'environnement, chaque obstacle est formé d'une pluralité de parties d'obstacle 57 contiguës les unes des autres. À titre d'exemple, le modèle de l'environnement est un fichier surfacique dans lequel les obstacles sont divisés en parties d'obstacle 57, préférentiellement un fichier de primitives géométriques. Dans ce dernier cas, les parties d'obstacle 57 sont par exemple des triangles contigus comprenant respectivement trois sommets. Chaque triangle partage deux sommets avec des triangles juxtaposés. Le modèle de l'environnement comprend, pour chacun desdits triangles, les coordonnées, dans un espace en trois dimensions, de chacun des trois sommets, et un vecteur normal au triangle. Le vecteur normal est orienté vers l'extérieur de l'obstacle. Chaque triangle est alors stocké dans le disque électronique 35.

Préférentiellement, le module d'obtention 55 est propre à obtenir le modèle de l'environnement depuis un utilisateur du dispositif de détermination 10.

Le disque dur 40 stocke en outre préférentiellement un module de définition 60 propre à définir, dans l'environnement, au moins une surface maillée 58. Le module de définition est par exemple propre à être exécuté par le processeur 25.

La surface maillée 58 est par exemple un plan. Selon un exemple le plan est horizontal. En variante, le plan est vertical.

Selon un autre exemple, la surface maillée 58 est courbe. La surface maillée 58 suit alors la forme du sol. Ainsi, la distance entre chaque point de surface maillée 58 et le sol est constante.

La surface maillée 58 présente un pavage de cellules. Chaque cellule est délimitée par un nombre N de côtés et par N sommets. Chaque sommet d'une cellule est un point de contrôle Pc. Préférentiellement, chaque cellule est de forme carré. On comprend alors que chaque point de contrôle Pc est commun à quatre cellules. Un côté de chaque cellule a une longueur par exemple égale à huit mètres, dix mètres ou seize mètres dans le modèle de l'environnement.

De manière avantageuse, le module de définition 60 est propre à définir plusieurs surfaces maillées 58, préférentiellement parallèles entre elles. Une distance entre deux surfaces maillées 58 successives est préférentiellement constante, par exemple égale à huit mètres, dix mètres, ou seize mètres.

Préférentiellement, les cellules de chaque surface maillée 58 sont identiques entre elles. Par exemple, la distance entre deux surfaces maillées 58 successives est identique à la longueur de chaque côté d'une cellule de chaque surface maillée 58. Dans ce dernier cas, les surfaces maillées 58 forment un pavage de l'environnement par une pluralité de volumes élémentaires dont des sommets sont les points de contrôle Pc. Si en plus les surfaces maillées 58 sont planes, chaque volume élémentaire a par exemple une forme cubique .

Chaque surface maillée 58 et points de contrôle Pc associés, sont préférentiellement stockés dans le disque électronique 35.

Le disque dur 40 stocke en outre un module de chargement 62 propre à être exécuté par la carte graphique 30, pour charger, dans la mémoire vidéo 50, le modèle de l'environnement et l'une des surfaces maillées 58.

Le disque dur 40 stocke en outre un premier module de détermination 65 propre à être exécuté par la carte graphique 30.

Le premier module de détermination 65 est propre à déterminer une trajectoire propre à chacun d'une pluralité de rayons émis, dit rayons initiaux, dans le modèle de l'environnement. Chaque rayon initial est émis depuis l'antenne émettrice 56. Le premier module de détermination 65 est préférentiellement propre à être exécuté par la carte graphique 30.

Le premier module de détermination 65 est propre à émettre, dans l'environnement, la pluralité de rayons initiaux depuis l'antenne émettrice 56. Chaque rayon initial est émis selon une direction d'émission $\theta, \phi$ qui lui est propre.

La direction d'émission $\theta, \phi$ est définie en coordonnées sphériques, par un premier angle $\theta$ et une deuxième angle $\phi$.

Les directions d'émission $\theta, \phi$ sont préférentiellement distinctes d'un rayon à un autre. Le premier module de détermination 65 est par exemple propre à déterminer aléatoirement chaque direction d'émission $\theta, \phi$ à partir d'une graine (de l'anglais *seed*) issue de la carte graphique 30, à un instant donné.

Chaque rayon initial émis suit une trajectoire sensiblement rectiligne.

Certains rayons initiaux ne sont réfléchis par aucune partie d'obstacle 57.

D'autres rayons initiaux se reflètent sur les parties d'obstacle 57 de l'environnement. Préférentiellement, le premier module de détermination 65 est propre à déterminer la trajectoire de chacun desdits rayons initiaux jusqu'à ce qu'une des deux conditions suivantes soit remplie :

- le nombre de réflexions du rayon initial atteint un premier seuil, et
- le rayon initial atteint la surface maillée 58.

Le premier seuil est par exemple égal à cinq. En effet, à chaque réflexion d'un rayon initial sur une partie d'obstacle 57, le signal électromagnétique porté par le rayon initial est en partie absorbé par la partie d'obstacle 57. Ainsi, à l'issue de cinq réflexions, le résidu de signal électromagnétique porté par le rayon initial est négligeable devant le signal électromagnétique émis par l'antenne émettrice 56.

Les trajectoires des rayons initiaux présentant des réflexions sont donc des lignes brisées comportant respectivement une pluralité de portions de rayon d1, d2, d3, d4 rectilignes ordonnées visibles sur la figure 2. Les portions de rayon sont ordonnées de sorte que la première portion de rayon d1 corresponde à la portion de rayon reliant l'antenne émettrice 56 à la première partie d'obstacle 57 rencontrée par le rayon initial.

Pour déterminer le reste de la trajectoire du rayon initial, le premier module de détermination 65 est propre à calculer un angle d'incidence de la première portion de rayon d1 sur la première partie d'obstacle 57 rencontrée. Le premier module de détermination 65 est propre à ensuite calculer une première direction de réflexion $\theta_{r1}, \varphi_{r1}$ du rayon initial à partir de l'angle d'incidence calculé, et préférentiellement en appliquant les lois de Snell-Descartes. Le premier module de détermination 65 est propre à calculer ensuite la trajectoire de la deuxième portion de rayon d2 comme sensiblement rectiligne depuis la première partie d'obstacle 57 selon la première direction de réflexion $\theta_{r1}, \varphi_{r1}$, par

exemple jusqu'à une deuxième partie d'obstacle 57 rencontrée par le rayon initial. Le premier module de détermination 65 est propre à itérer le calcul de l'angle d'incidence, de la direction de réflexion $\theta_r$, $\phi_r$ et de la trajectoire pour chaque partie d'obstacle 57 rencontrée par le rayon initial.

Une trajectoire d'un rayon initial atteignant la surface maillée 58 est représentée sur la figure 2. Sur la figure 2, la surface maillée 58 est représentée comme un plan vertical. En variante, la surface maillée 58 est un plan horizontal.

En particulier, comme visible sur la figure 2, le rayon initial est émis selon la direction d'émission $\theta$, $\phi$ formant la première portion de rayon d1. Le rayon initial est réfléchi sur la première partie d'obstacle 57, formant ainsi la deuxième portion de rayon d2. Puis le rayon initial est réfléchi sur la deuxième partie d'obstacle 57, formant la troisième partie d'obstacle d3. Le rayon initial est ensuite réfléchi sur la troisième partie d'obstacle 57, formant la quatrième position de rayon d4. La quatrième portion d'obstacle d4 atteint le surface maillée 58. Plus particulièrement, la quatrième portion de rayon d4 atteint une cellule, nonreprésentée, en un point d'impact P. Un point de contrôle Pc associé à ladite cellule est représenté sur la figure 2.

Chaque rayon initial atteignant la surface maillée 58 et ne comprenant pas de réflexion, est appelé « trajet direct ».

Préférentiellement, le premier module de détermination 65 est propre à émettre un nombre de rayons initiaux tel que la mémoire vidéo 50 soit saturée. On entend par l'expression « être saturée » que la mémoire vidéo 45 ne dispose plus d'espace de stockage disponible. Le nombre de rayons initiaux émis est supérieur à dix millions, préférentiellement égal à cent millions. Ainsi, avec un tel nombre de rayons initiaux émis selon des directions d'émission $\theta$, $\phi$ aléatoires, l'ensemble des directions d'émission $\theta$, $\phi$ possibles est sensiblement uniformément discrétisé.

Le premier module de détermination 65 est en outre propre à émettre des rayons initiaux selon des directions d'émission $\theta$,$\phi$ choisies, comme il sera décrit par la suite.

Le disque dur 40 stocke en outre un premier module de comparaison 67 propre à être exécuté par la carte graphique 30 pour vérifier, pour chaque rayon initial, s'il respecte une contrainte associée à un ou à des points de contrôle Pc.

Préférentiellement, la contrainte associée à chaque point de contrôle Pc est que ledit rayon initial atteigne la surface maillée 58 en un point d'impact P localisé dans une cellule dont ledit point de contrôle Pc est un sommet. Le premier module de comparaison 67 est propre à considérer, pour chaque rayon initial, que la contrainte est respectée pour les quatre points de contrôle Pc formant des sommets de la cellule atteinte par le rayon initial.

Préférentiellement, le premier module de comparaison 67 est propre à supprimer de la mémoire vidéo 50, les trajectoires des rayons initiaux qui ne respectent la contrainte associée à aucun point de contrôle Pc.

Le disque dur 40 stocke en outre un module de calcul 70 propre à être exécuté par la carte graphique 30. Le module de calcul 70 est propre à calculer, pour chaque rayon initial respectant une contrainte associée à un point de contrôle Pc, une trajectoire d'un rayon corrigé RC passant par ledit point de contrôle Pc et par l'antenne émettrice 56. Autrement dit, le module de calcul 70 est propre à calculer, pour chaque rayon initial atteignant la surface maillée 58, les trajectoires de quatre rayons corrigés RC reliant respectivement l'antenne émettrice 56 et un sommet distinct de la cellule atteinte par le rayon initial.

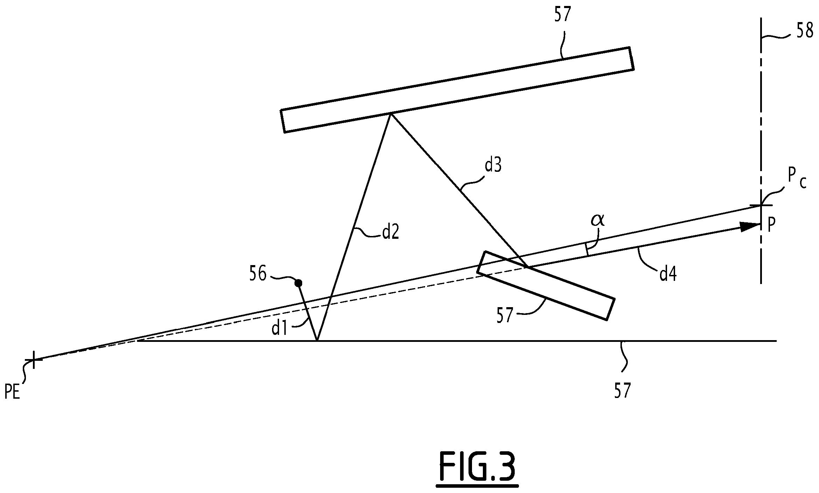

Le calcul de la trajectoire d'un rayon corrigé RC est illustré sur les figures 3 à 5.

En référence à la figure 3, le module de calcul 70 est propre à calculer la position d'un point fictif d'émission PE situé à une distance du point d'impact P égale à la somme des longueurs de chaque portion de rayon d1, d2, d3, d4, et dans le prolongement de la dernière portion de rayon, i.e. la quatrième portion de rayon d4 dans l'exemple représenté.

Le module de calcul 70 est propre à mesurer l'angle $\alpha$ formé entre le segment reliant le point fictif d'émission PE et le point d'impact P et le segment reliant le point fictif d'émission PE et le point de contrôle Pc.

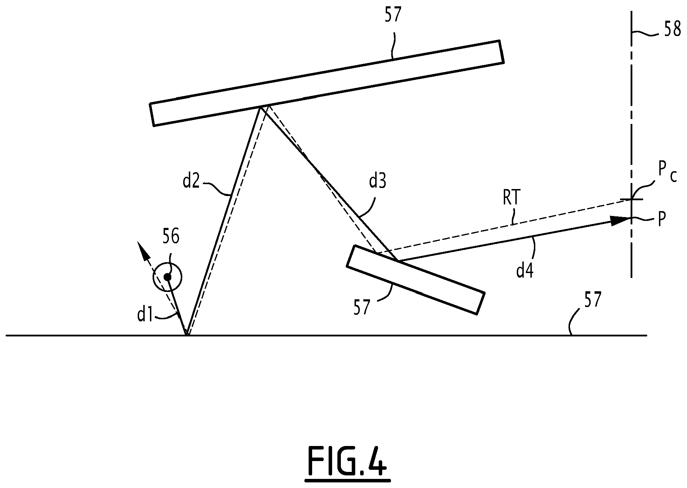

Le module de calcul 70 est propre à ensuite émettre, depuis le point de contrôle Pc associé au point d'impact P, un rayon de test RT visible sur la figure 4. Le rayon de test RT est émis, depuis ledit point de contrôle Pc, en direction du point fiction d'émission PE.

En référence à la figure 4, le module de calcul 70 est propre à calculer la trajectoire dudit rayon de test RT en considérant ses potentielles réflexions sur les parties d'obstacle 57. Le calcul de la trajectoire du rayon de test RT est analogue au calcul des trajectoires des rayons initiaux mis en oeuvre par le premier module de détermination 65.

Selon l'exemple représenté sur la figure 4, le rayon de test RT est réfléchi sur les mêmes parties d'obstacle 57 que le rayon comprenant les portions de rayon d1, d2, d3, d4 jusqu'à passer proche de l'antenne émettrice 56.

Dans l'exemple de la figure 4, le rayon de test RT n'atteint pas exactement la position de l'antenne émettrice 56 notamment à cause d'approximations numériques effectuées par la carte graphique 30 lors du calcul de la trajectoire dudit rayon de test RT.

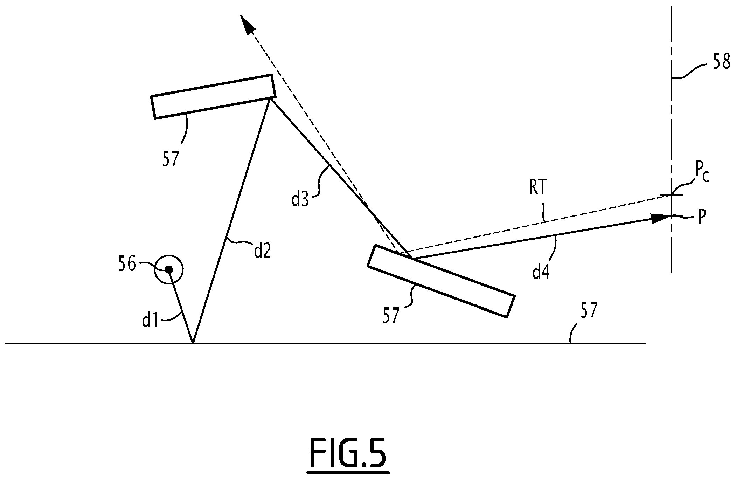

Il est cependant possible, comme représenté sur la figure 5, que la géométrie des parties d'obstacle 57 soit telle que le rayon de test RT s'éloigne sensiblement du rayon initial comprenant les portions d1, d2, d3, d4, et ne se rapproche pas de l'antenne émettrice 56.

Pour distinguer ces deux cas, le module de calcul 70 est propre à comparer, en tout point du rayon de test RT, la distance entre ledit rayon de test RT et l'antenne émettrice 56.

On définit la distance entre l'antenne émettrice 56 et le rayon de test RT comme étant la longueur du segment le plus court reliant l'antenne émettrice 56 et un point du rayon de test RT.

Le module de calcul 70 est propre à, si la distance calculée est supérieure à un deuxième seuil, considérer que pour ce rayon initial et ce point de contrôle Pc, aucun rayon corrigé RT ne peut être déterminé. Le deuxième seuil est par exemple égal à la moitié de la taille d'une cellule de la surface maillée 58.

Le module de calcul 70 est propre à, si la distance calculée est inférieure au deuxième seuil, émettre, depuis l'antenne émettrice 56, un rayon corrigé RC selon une direction d'émission corrigée $\theta_c, \phi_c$. La direction d'émission corrigée $\theta_c, \phi_c$ est égale à la direction d'émission $\theta, \phi$ du rayon initial, modifiée d'un angle égal à l'angle $\alpha$ précédemment mesuré.

Le module de calcul 70 est propre à calculer la trajectoire du rayon corrigé RC de manière analogue à ce qui a été décrit précédemment.

A cause d'approximations numériques, le rayon corrigé RC n'atteint pas parfaitement le point de contrôle Pc. La détermination de la direction d'émission corrigé $\theta_c, \phi_c$ permet cependant d'assurer que le rayon corrigé RC atteigne une position proche du point de contrôle Pc. Préférentiellement, le module de calcul 70 est configuré pour déterminer la distance entre le rayon corrigé RC et el point de contrôle Pc comme décrit cidessus pour le rayon de test RT et l'antenne émettrice 56.

Le module de calcul 70 est propre à itérer ce qui est décrit précédemment pour chaque couple de point de contrôle Pc et de rayon initial, pour lequel le rayon initial respecte la contrainte relative au point de contrôle Pc.

Le disque dur 40 stocke en outre un premier module de stockage 75 propre à être exécuté par la carte graphique 30 pour organiser un stockage des trajectoires de rayons corrigés RC dans une base de données temporaire qui est mémorisée dans la mémoire vidéo 50. Par exemple, le premier module de stockage 75 stocke, dans la base de données temporaire et pour chaque rayon corrigé RC, la position du point de contrôle Pc associé au rayon corrigé RC, la direction d'émission corrigée $\theta_c, \phi_c$ dudit rayon corrigé RC.

Préférentiellement, pour chaque rayon corrigé RC, le premier module de stockage 75 est en outre propre à stocker dans la base de données temporaire, un identifiant de chaque partie d'obstacle 57 sur lequel le rayon corrigé RC se réfléchit.

Dans l'exemple selon lequel chaque partie d'obstacle 57 est un triangle, l'identifiant de chaque partie d'obstacle 57 est préférentiellement un barycentre des sommets du triangle, ou un identifiant correspondant à l'index du triangle dans une liste.

La base de données temporaire est préférentiellement ordonnée en fonction de la position des points de contrôle Pc. Autrement dit, la base de données temporaire est par exemple un tableau comprenant successivement les trajectoires de tous les rayons corrigés arrivant sur un même point de contrôle Pc.

Le disque dur 40 stocke en outre un module de présélection 80 préférentiellement propre à être exécuté par la carte graphique 30. Le module de présélection 80 est propre à, si la base de données temporaire comprend plusieurs rayons corrigées RC dont des directions d'émission corrigées $\theta_c, \phi_c$ sont sensiblement identiques., i.e. dont les angles d'émission corrigées $\theta_c, \phi_c$ sont identiques à une différence près inférieure à un troisième seuil présélectionner uniquement un desdits rayons corrigés RC. Par exemple, le rayon présélectionné est celui dont une distance a point de contrôle $P_c$ est la plus faible.,

En effet, puisque chaque point de contrôle Pc est préférentiellement commun à plusieurs cellules, la détermination des trajectoires de rayons corrigés RC, pour un même point de contrôle Pc mais pour des rayons initiaux distincts, est susceptible de conduire à des rayons corrigés RC sensiblement identiques. Le module de présélection 80 permet alors d'éviter les doublons dans la base de données temporaire.

Préférentiellement, le module de présélection 80 est propre à, si la base de données temporaire comprend plusieurs rayons corrigés RC dont des directions d'émission corrigées $\theta_c, \phi_c$ sont sensiblement identiques, et en outre dont une trajectoire respective est réfléchie sur les mêmes parties d'obstacle 57, présélectionner uniquement un desdits rayons corrigés RC.

On comprend alors que les rayons corrigés RC présélectionnés correspondent à un nombre réduit de rayons corrigés RC stockés dans la base de données temporaire.

En complément facultatif, le disque dur 40 stocke en outre un deuxième module de stockage 85 propre à être exécuté par le processeur 25. Le deuxième module de stockage 85 est propre à stocker, dans une base de données cumulées, localisée dans la mémoire vive 45, les rayons présélectionnés.

Le disque dur 40 stocke en outre un module de sélection 90 propre à, si la base de données cumulées comprend plusieurs rayons présélectionnés dont des directions d'émission corrigées $\theta_c, \phi_c$ sont sensiblement identiques, i.e. identiques à une différence près inférieure au troisième seuil, sélectionner uniquement un des rayons présélectionnés, préférentiellement, celui dont la distance au point de contrôle Pc considéré est la plus faible.

Préférentiellement, le module de sélection 90 est propre à, si la base de données cumulées comprend plusieurs rayons présélectionnés dont des directions d'émission $\theta_c, \phi_c$ sont sensiblement identiques, et en outre dont une trajectoire respective est réfléchie sur les mêmes parties d'obstacle 57, sélectionner uniquement un desdits rayons présélectionnés comme décrit précédemment.

En variante, le disque dur 40 ne stocke pas le premier module de stockage 75 et le module de présélection 80. Ainsi, le deuxième module de stockage 85 est propre à stocker directement dans la base de données cumulées, les rayons corrigés RC calculés par le module de calcul 70. Le module de sélection 90 est alors propre à sélectionner des rayons corrigés RC et non des rayons présélectionnés.

Le disque dur 40 stocke en outre un deuxième module de comparaison 95 propre à être exécuté par le processeur 25. Le deuxième module de comparaison 95 est propre à comparer un rapport entre le nombre de rayons sélectionnés et le nombre de rayons présélectionnés dans la base de données cumulées, à un quatrième seuil.

Le module de comparaison 95 est propre à, si ledit rapport est supérieur au quatrième seuil, commander une répétition des fonctions logicielles des premier module de détermination de 65, premier module de comparaison 67, module de calcul 70, premier module de stockage 75, module de présélection 80, deuxième module de stockage 85 et module de sélection 90.

Préférentiellement, lors d'une nouvelle itération, les données stockées dans la mémoire vidéo 50 et associées à une itération précédente sont supprimées.

Préférentiellement, lors d'une nouvelle itération, le premier module de détermination 65 est propre à émettre des rayons initiaux selon des directions d'émission $\theta$, $\phi$ déterminées aléatoirement à partir d'une graine propre à l'itération. En variante, les directions d'émission $\theta$, $\phi$ sont déterminées de manière à émettre plus de rayons initiaux dans des directions sensiblement proches de celles des rayons sélectionnés lors d'une itération précédente, tout en conservant une part d'aléa.

Préférentiellement, la base de données temporaire est propre à chaque itération.

Préférentiellement, la base de données cumulées est commune à chaque itération. Ainsi, le module de sélection 95 est propre à effectuer sa sélection parmi les rayons présélectionnés lors de toutes les itérations.

Préférentiellement, le deuxième module de comparaison 95 est configuré, à partir de la deuxième itération, pour également comparer le numéro de l'itération à un cinquième seuil, correspondant à un nombre maximum d'itérations, par exemple 1000. Le deuxième module de comparaison 95 est propre à commander une nouvelle itération uniquement si le rapport entre le nombre de rayons sélectionnés et le nombre de rayons présélectionnées dans la base de données cumulées est supérieur au quatrième seuil, et si le numéro de l'itération est inférieur au cinquième seuil.

On comprend que les itérations commandées par le deuxième module de comparaison 95 sont effectuées pour une même surface maillée 58.

Le disque dur 40 stocke en outre un troisième module de comparaison 97 propre à vérifier si toutes les surfaces maillées 58 stockées dans le disque électronique 35 ont été traitées.

Le troisième module de comparaison 97 est propre à, si toutes les surfaces maillées 58 n'ont pas été traitées, alors choisir une surface maillée 58 non-traitée et réitérer les fonctions logicielles des modules de chargement 62, premier module de détermination 65, module de calcul 70, premier module de stockage 75, module de présélection 80, deuxième module de stockage 85, module de sélection 90, et deuxième module de comparaison 95, à partir de la surface maillée choisie 58.

Le disque dur 40 stocke en outre un deuxième module de détermination 98, préférentiellement propre à être exécuté par le processeur 25. Le deuxième module de détermination 98 est propre à déterminer la couverture réseau au ou à chaque point de contrôle Pc, par application, aux rayons sélectionnés de la base de données cumulées, d'un modèle de pertes dans les signaux électromagnétiques. Le modèle de pertes dépend du nombre de rayons sélectionnés atteignant le point de contrôle Pc dans la base de données cumulées, d'une longueur de la trajectoire de chaque rayon sélectionné et d'un nombre de réflexions dans la trajectoire de chaque rayon sélectionné.

Préférentiellement, le modèle de pertes est tel que la couverture réseau à chaque point de contrôle Pc est égale à une somme de contributions, chaque contribution étant associée à un rayon sélectionné de la base de données cumulées. Chaque contribution est une puissance Pu du rayon associé, inversement proportionnel à la distance parcourue par ledit rayon depuis l'antenne émettrice 56, et fonction du nombre de réflexions dudit rayon sur des parties d'obstacle 57.

Par exemple, la puissance Pu d'un rayon du type « trajet direct » est obtenu avec l'équation suivante :

[MATH 1]

$$Pu = \sqrt{30.\, Pe\, Ge.}\, \frac{e^{\left(\frac{j.2\pi r}{\lambda}\right)}}{r}$$

où *Pe* est la puissance du signal au niveau de l'antenne émettrice 56,

*Ge* est un gain de l'antenne émettrice 56, le gain *Ge* est propre à dépendre de la direction d'émission corrigée $\theta_c$, $\phi_c$ du rayon sélectionné,

*j* est le nombre complexe,

*r* est la longueur du rayon sélectionné, et

$\lambda$ est la longueur d'onde du signal émis par l'antenne émettrice 56 et porté par le rayon sélectionné.

La puissance Pu d'un rayon du type « multi-trajets » est obtenue avec l'équation suivante :

[MATH 2]

$$Pu = \sqrt{30. \, Pe \, Ge} \, \frac{\prod_{k=1}^{N} e^{j.(k-1).\pi} \, e^{\left(\frac{j.2\pi r_k}{\lambda}\right)}}{\sum_{k=1}^{N} r_k}$$

où $\prod_{k=1}^{N}$ est l'opérateur produit pour $k$ allant de 1 à $N$,
$N$ est le nombre de portions du rayon sélectionné,
$r_k$ est la longueur de la k-ième portion du rayon sélectionné, et

$\sum_{k=1}^{N}$ est l'opérateur somme pour $k$ allant de 1 à $N$.

En complément facultatif, le modèle de pertes prend également en compte un matériau associé à chaque partie d'obstacle 57 sur lequel se reflète le rayon sélectionné. Dans ce cas, une absorption supplémentaire est ajoutée à chaque réflexion en fonction du matériau de la partie d'obstacle 57 sur laquelle le rayon sélectionné se réfléchie.

Optionnellement, le disque dur 40 stocke en outre un module d'affichage 99 propre à générer une image de l'environnement dans laquelle une échelle de niveau de gris, ou de couleur, est affectée à chaque point de contrôle Pc en fonction de la couverture réseau déterminé par le deuxième module de détermination 98.

Le module d'affichage 99 est propre à envoyer, à l'écran d'affichage 15, l'image générée pour son affichage à destination d'un utilisateur du dispositif de détermination 10.

Les modules 55, 60, 62, 65, 67, 70, 75, 80, 85, 90, 95, 97, 98, 99 forment par exemple un programme d'ordinateur propre à être stocké sur un support d'informations.

Le support d'information est un support lisible par l'unité de traitement 20. Le support lisible d'informations est un médium adapté à mémoriser des instructions électroniques et capable d'être couplé à un bus d'un système informatique.

A titre d'exemple, le support d'informations est une clé USB, une disquette ou disque souple (de la dénomination anglaise « Floppy disc »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations est mémorisé le programme d'ordinateur comprenant des instructions de programme.

Le programme d'ordinateur est chargeable sur l'unité de traitement 20 et est adapté pour entraîner la mise en oeuvre d'un procédé de détermination d'une couverture réseau, lorsque le programme d'ordinateur est mis en oeuvre sur l'unité de traitement 20. Un tel procédé de détermination sera décrit dans la suite de la description.

Selon une variante, chaque surface maillées 58 est divisée en un nombre prédéfini de quadrants, chaque point de contrôle Pc appartenant à un des quadrants.

Selon cette variante, le premier 75 et le deuxième 85 modules de stockage sont configurés pour stocker en outre, dans leur base de données respective, le quadrant associé à chaque point de contrôle Pc. Préférentiellement, la base de données temporaire et la base de données cumulées sont ordonnées en fonction des quadrants. Ceci permet de faciliter la présélection et la sélection des modules de présélection 80 et de sélection 90.

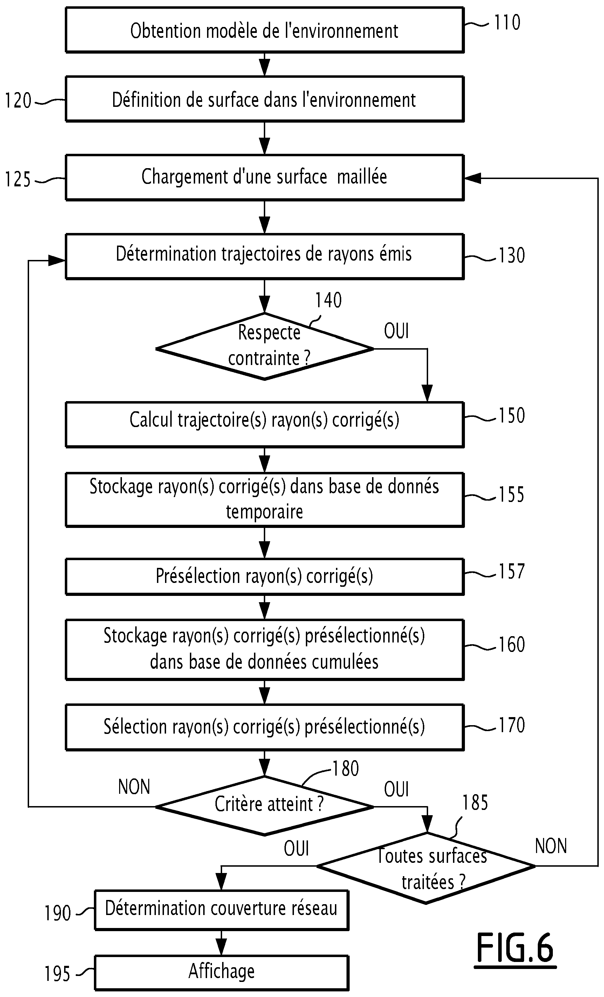

Le fonctionnement du dispositif de détermination 10 va maintenant être décrit en référence à la figure 6 représentant un organigramme d'un procédé de détermination d'une couverture réseau.

Le procédé de détermination comprend une étape d'obtention 110 lors de laquelle le processeur 25 obtient, depuis l'utilisateur, le modèle de l'environnement. Le modèle de l'environnement est préférentiellement stocké dans le disque électronique 35.

Le procédé comprend en outre une étape de définition 120 lors de laquelle le processeur 25 définit la ou les surfaces maillées 58 tel que décrit précédemment. Préférentiellement, chaque surface maillée 58 est divisée en le nombre prédéfini de quadrants, chaque point de contrôle Pc appartenant à un des quadrants.

Le numéro de l'itération est initialisé à la valeur 1.

Le procédé comprend en outre une étape de chargement 125, lors de laquelle la carte graphique 30 charge, dans la mémoire vidéo 50, le modèle de l'environnement et l'une des surfaces maillées 58 définies lors de l'étape de définition 120, via l'exécution du module de chargement 62.

Le procédé comprend en outre une première étape de détermination 130, lors de laquelle la carte graphique 30 émet, via l'exécution du premier module de détermination 65, des rayons initiaux, dans le modèle de l'environnement et selon la pluralité de directions d'émission $\theta$, $\phi$, jusqu'à surcharger la mémoire vidéo 50.

Toujours lors de la première étape de détermination 130, la carte graphique 30 détermine, via l'exécution du premier module de détermination 65, la trajectoire de chaque rayon initial émis jusqu'à ce que, pour ledit rayon initial, l'une des deux conditions suivantes soit remplie :

- le nombre de réflexions du rayons initial sur des parties d'obstacle 57 atteint le premier seuil, et
- le rayon initial atteint la surface maillée 58 chargée.

Puis, le procédé comprend une étape de comparaison 140, pour chaque point de contrôle Pc, lors de laquelle la carte graphique 30 vérifie, via l'exécution du premier module de comparions 67, si la trajectoire d'un ou plusieurs rayons initiaux respecte la contrainte associée au point de contrôle Pc. Préférentiellement, la contrainte est que la trajectoire du rayon initial soit telle que le rayon initial atteigne une cellule ayant ledit point de contrôle Pc comme sommet.

Puis, le procédé comprend une étape de calcul 150, lors de laquelle la carte graphique 30 calcule, pour chaque point de contrôle Pc et pour chaque rayon initial respectant la contrainte associée audit point de contrôle Pc, la trajectoire d'un rayon corrigé RC correspondant comme expliqué précédemment en référence aux figures 3 à 5. La carte graphique 30 calcule notamment la direction d'émission corrigée $\theta_c$, $\phi_c$ de chaque rayon corrigée RC. Préférentiellement, la carte graphique 30 effectue ces calculs par exécution du module de calcul 70.

Pour certains points de contrôle Pc et certains rayons initiaux respectant la contrainte associée au point de contrôle Pc, la trajectoire d'aucun rayon corrigé RC ne peut être calculée.

Puis, le procédé comprend une première étape de stockage 155, lors de laquelle la carte graphique 30 stocke, dans la base de données temporaire, les trajectoires des rayons corrigés RC calculées lors de l'étape de calcul 150, préférentiellement par exécution du premier module de stockage 75. La base de données temporaire est par exemple localisée dans la mémoire vidéo 50.

Préférentiellement, chaque rayon corrigé RC est stocké dans la base de données temporaire en fonction du quadrant auquel appartient le point de contrôle Pc associé audit rayon corrigé RC.

A l'issu de la première étape de stockage 155, la base de données temporaire comprend, pour chaque rayon corrigé RC, la direction d'émission corrigée $\theta_c$, $\phi_c$, et préférentiellement l'identifiant de chaque partie d'obstacle 57 sur laquelle le rayon corrigé RC se réfléchie.

Puis, le procédé comprend une étape de présélection 157, lors de laquelle si la base de données temporaire comprend plusieurs rayons corrigés RC dont des directions d'émission corrigées $\theta_c$, $\phi_c$ sont sensiblement identiques, alors la carte graphique 30 présélectionne uniquement un desdits rayons corrigés RC, via l'exécution du module de présélection 80, comme décrit précédemment.

Préférentiellement, l'étape de présélection 157 prend également en compte les identifiants des parties d'obstacle 57 sur lesquelles les rayons corrigés RC sont réfléchis. Ainsi, la carte graphique 30 ne présélectionne qu'un unique rayon corrigé RC parmi les rayons corrigés RC de la base de données temporaire, ayant des directions d'émission corrigées $\theta_c$, $\phi_c$ sensiblement identiques et en outre se réfléchissant sur les mêmes parties d'obstacle 57, comme décrit précédemment.

Avantageusement, l'étape de présélection 157 est effectuée successivement pour chaque quadrant stocké dans la base de données temporaire.

Le procédé comprend en outre une deuxième étape de stockage 160 lors de laquelle les rayons présélectionnés sont stockés, par le processeur 25, dans la base de données cumulées, par exemple via l'exécution du deuxième module de stockage 85.

La base de données cumulées est par exemple ordonnée par quadrant.

Le procédé comprend en outre une étape de sélection 170 analogue à l'étape de présélection 157 mais à partir des rayons présélectionnés de la base de données cumulées. L'étape de sélection 170 n'a préférentiellement d'intérêt que pour des itérations distinctes de la première itération. L'étape de sélection 170 est préférentiellement mise en oeuvre par le processeur 25, via l'exécution du module de sélection 90.

Ainsi, si la base de données cumulées est ordonnée par quadrant, l'étape de sélection 170 est effectuée parallèlement, ou successivement, pour chaque quadrant de la base de données cumulées.

Selon une variante, le procédé ne comprend ni la première étape de stockage 155, ni l'étape de présélection 157. Ainsi, lors de la deuxième étape de stockage 160, tous les rayons corrigés RC sont stockés dans la base de données cumulées. Lors de l'étape de sélection 170, les rayons sélectionnés sont donc les rayons corrigés RC stockés dans la base de données cumulées. Selon cette variante, les étapes de stockage 160 et de sélection 170 ont un intérêt même pour la première itération.

Le procédé comprend en outre une deuxième étape de comparaison 180, lors de laquelle le processeur 25 vérifie si le critère est atteint via l'exécution du deuxième module de comparaison 95. Autrement dit, le processeur 25 vérifie par exemple si le rapport entre le nombre de rayons sélectionnés et le nombre de rayons dans la base de données cumulées est supérieur au quatrième seuil, et/ou préférentiellement si le numéro de l'itération en cours est égal au cinquième seuil.

Si non, alors le numéro d'itération est incrémenté, la base de données temporaire est supprimée et la première étape de détermination 130, la première étape de comparaison 140, l'étape de calcul 150, la première étape de stockage 155, l'étape de présélection 157, la deuxième étape de stockage 160 et l'étape de sélection 170 sont répétées.

Lors de la ou des itérations successives, les directions d'émission $\theta$, $\phi$ des rayons initiaux sont par exemple choisies pour être sensiblement similaires aux directions d'émission corrigées $\theta_c$, $\phi_c$ des rayons sélectionnées de la base de données cumulées, tout en conservant une partie d'aléa comme décrit précédemment.

La base de données cumulées est commune à toutes les itérations puisque la mémoire vive 45 n'est pas vidée.

Si oui, alors le procédé se poursuit en passant à une troisième étape de comparaison 185. Dans ce cas, la surface maillée 58 chargée lors de l'étape de chargement 130 est entièrement traitée. Le processeur 25 déplace préférentiellement la base de données cumulées dans le disque électronique 35.

Lors de la troisième étape de comparaison 185, le processeur 25 vérifie si toutes les surfaces maillées 58 ont été traitées, via l'exécution du troisième module de comparaison 97.

Si non, les étapes de chargement 125, de détermination 130, de comparaison 140, de calcul 150, de stockage 155, de présélection 157, de stockage 160, de sélection 170, et de comparaison 180, ainsi que leur potentielles réitérations, sont répétées à partir de l'étape de chargement 125 lors de laquelle une nouvelle surface maillée 58 est chargée dans la mémoire vidéo 50.

Si oui, alors le disque électronique 35 comprend une base de données cumulées pour chaque surface maillée 58 et le procédé passe à une deuxième étape de détermination 190. Lors de la deuxième étape de détermination 190, le processeur 25 détermine la couverture réseau à chaque point de contrôle Pc par application, aux rayons sélectionnés de chaque base de données cumulées, du modèle de pertes dans les signaux électromagnétiques tel que décrit précédemment.

En complément facultatif, le procédé comprend ensuite une étape d'affichage 195 lors de laquelle le processeur 25 génère, via l'exécution du module d'affichage 99, l'image de l'environnement décrite précédemment et l'envoie à l'écran d'affichage 15 pour son affichage à destination de l'utilisateur du dispositif de détermination 10.

Selon une variante, toutes les étapes dudit procédé sont exécutées par le processeur 25, la mémoire vidéo 50 correspondant alors à une partie de la mémoire vive 45.

Le procédé de détermination selon la présente invention s'adapte donc à tout type d'environnement, et notamment à des environnements de grandes dimensions.

En outre, la structure du procédé de détermination selon l'invention permet paralléliser les étapes de chargement 125, de détermination 130, de comparaison 140, de calcul 150, de stockage 155, et de présélection 157, sur plusieurs cartes graphiques 30 mises en parallèles. En particulier, chaque surface maillée 58 peut être traitée simultanément par des cartes graphiques 30 parallèles.

## Revendications

1. Procédé de détermination d'une couverture réseau en au moins un point de contrôle (Pc) compris dans un environnement, l'environnement comprenant au moins une antenne émettrice (56) d'un signal électromagnétique, le procédé étant mis en oeuvre par un dispositif électronique de détermination (10) et comprenant les étapes suivantes :

   - obtention (110) d'un modèle de l'environnement, le modèle comprenant des obstacles propre à réfléchir le signal électromagnétique, l'antenne émettrice (56) et le point de contrôle (Pc),
   chaque obstacle étant formé d'une pluralité de parties d'obstacle (57),
   - détermination (130) d'une trajectoire propre à chacun d'une pluralité de rayons initiaux, chaque rayon initial étant émis depuis l'antenne émettrice (56), dans le modèle de l'environnement, selon une direction d'émission ($\theta$, $\phi$) respective, au moins un parmi la pluralité de rayons initiaux étant réfléchi sur au moins une partie d'obstacle (57),
   - pour le ou chaque rayon initial dont la trajectoire respecte une contrainte associée au ou à un des points de contrôle (Pc), calcul (150) pour le ou l'un desdits points de contrôle (Pc), d'une trajectoire d'un rayon corrigé (RC) passant par ledit point de contrôle (Pc) et par l'antenne émettrice (56),
   la trajectoire de chaque rayon corrigé (RC) comprenant une direction d'émission corrigée ($\theta_c$, $\phi_c$),
   - stockage (160) du ou d'au moins une partie des rayons corrigés (56) et de leur trajectoire respective, dans une base de données cumulées,
   - pour chaque point de contrôle (Pc), si la base de données cumulées comprend plusieurs rayons corrigés dont des directions d'émission corrigées ($\theta_c$, $\phi_c$) sont sensiblement identiques, sélection (170) d'uniquement un desdits rayons corrigés (RC), et
   - détermination (190) de la couverture réseau au ou à chaque point de contrôle (Pc) par application, aux rayons sélectionnés de la base de données cumulées, d'un modèle de pertes dans les signaux électromagnétiques,

le modèle de pertes dépendant du nombre de rayons sélectionnés atteignant le point de contrôle (Pc), d'une longueur de la trajectoire de chaque rayon sélectionné et d'un nombre de réflexions dans la trajectoire de chaque rayon sélectionné.

2. Procédé selon la revendication précédente, comprenant entre l'étape d'obtention (110) et l'étape (130) de détermination de trajectoires :

- une étape (120) de définition de plusieurs surfaces maillées (58) dans l'environnement, chaque surface maillée (58) présentant un pavage de cellules, chaque cellule étant délimité par un nombre N de côtés et par N sommets, chaque sommet étant un point de contrôle (Pc), et
- une étape de chargement (125) d'une surface maillée (58) parmi les surfaces maillées
lors de l'étape de calcul (150), la contrainte associée à chaque point de contrôle (Pc) étant que le rayon atteigne une cellule dont un sommet est ledit point de contrôle (Pc),
les surfaces maillées (58) étant de préférence planes et préférentiellement encore parallèles entre elles.

3. Procédé selon la revendication précédente, dans lequel les étapes de chargement (130), de détermination de trajectoires (130), de calcul de rayon(s) corrigé(s) (150), de stockage (160) et de sélection (170) sont itérées pour chacune des surfaces maillées (58).

4. Procédé selon l'une quelconque des revendications 2 et 3, dans lequel chaque surface maillée (58) est divisée en un nombre prédéfini de quadrants, chaque point de contrôle (Pc) appartenant à un des quadrants,

lors de l'étape de stockage (160), le quadrant associé au point de contrôle (Pc) de chaque rayon corrigé étant également stockée dans la base de données cumulées, et
l'étape de sélection (170) étant effectuée parallèlement, ou successivement, pour chaque quadrant de la base de données cumulées.

5. Procédé selon l'une quelconque des revendications précédentes, dans lequel, pour au moins un rayon initial respectant la contrainte associée au ou à un des points de contrôle (Pc), aucun rayon corrigé (RC) correspondant ne relie l'antenne émettrice (56) et ledit point de contrôle (Pc),
lors de l'étape de calcul (150), pour ce rayon initial et pour ce point de contrôle (Pc), aucun rayon corrigé (RC) n'étant alors calculé.

6. Procédé selon l'une quelconque des revendications précédentes, dans lequel les étapes de détermination de trajectoires (130), de calcul de rayon(s) corrigé(s) (170), de stockage (160) et de sélection (170) sont itérées plusieurs fois,

les directions d'émission $(\theta, \phi)$ des rayons initiaux émis lors de l'étape de détermination de trajectoires (130) étant distinctes d'une itération à une autre,
préférentiellement, les étapes de détermination de trajectoires (130), de calcul (150), de stockage (160) et de sélection (170) sont itérées jusqu'à ce qu'un critère soit atteint,
le critère étant que:

- le nombre d'itération est égal à un seuil, et/ou
- un rapport entre le nombre de rayons sélectionnés lors de l'étape de sélection (170) et le nombre de rayons dans la base de données cumulées est supérieur ou égal à un autre seuil.

7. Procédé selon l'une quelconque des revendications précédentes, dans lequel le modèle de pertes est tel que la couverture réseau au ou à un des points de contrôle (Pc) est égale à une somme de contributions, chaque contribution étant associée à un rayon sélectionné de la base de données cumulées,
chaque contribution étant une puissance (Pu) du rayon sélectionné, inversement proportionnelle à la distance parcourue par ledit rayon sélectionné depuis l'antenne émettrice (56), et fonction du nombre de réflexions dudit rayon sélectionné sur des parties d'obstacle (57).

8. Procédé selon l'une quelconque des revendications précédentes, dans lequel le dispositif électronique de détermination (10) comprend au moins une carte graphique (30), les étapes de détermination de trajectoires (130) et de calcul (150) étant mises oeuvre par la ou les cartes graphiques (30).

9. Produit programme d'ordinateur comprenant des instructions logicielles, qui lorsqu'elles sont exécutées par un ordinateur, mettent en oeuvre un procédé de détermination selon l'une quelconque des revendications précédentes.

10. Dispositif électronique de détermination (10) d'une couverture réseau en au moins un point de contrôle (Pc) compris dans un environnement, l'environnement comprenant au moins une antenne émettrice (56) d'un signal électromagnétique, le dispositif électronique de détermination (10) comprenant :

- un module d'obtention (55) propre à obtenir un modèle de l'environnement, le modèle comprenant des obstacles propre à réfléchir le signal électromagnétique, l'antenne émettrice (56) et le point de contrôle (Pc), chaque obstacle étant formé d'une pluralité de parties d'obstacle (57),
- un premier module de détermination (65) propre à déterminer une trajectoire propre à chacun d'une pluralité de rayons initiaux, chaque rayon initial étant émis depuis l'antenne émettrice (56), dans le modèle de l'environnement, selon une direction d'émission ($\theta$, $\phi$) respective, au moins un parmi la pluralité de rayons initiaux étant réfléchi sur au moins une partie d'obstacle (57),
- un module de calcul (70) propre à calculer, pour le ou chaque rayon initial dont la trajectoire respecte une contrainte associée au ou à un des points de contrôle (Pc), pour le ou l'un desdits points de contrôle (Pc), une trajectoire d'un rayon corrigé (RC) passant par ledit point de contrôle (Pc) et par l'antenne émettrice (56), la trajectoire de chaque rayon corrigé (RC) comprenant une direction d'émission corrigée ($\theta_c$, $\phi_c$),
- un module de stockage (85) propre à stocker le ou au moins une partie des rayons corrigés (56) et de leur trajectoire respective, dans une base de données cumulées,
- un module de sélection (90) propre à sélectionner, pour chaque point de contrôle (Pc), si la base de données cumulées comprend plusieurs rayons corrigés dont des directions d'émission corrigées ($\theta_c$, $\phi_c$) sont sensi-blement identiques, uniquement un desdits rayons corrigés (RC), et
- un deuxième module de détermination (98) propre à déterminer la couverture réseau au ou à chaque point de contrôle (Pc) par application, aux rayons sélectionnés de la base de données cumulées, d'un modèle de pertes dans les signaux électromagnétiques,
le modèle de pertes dépendant du nombre de rayons sélectionnés atteignant le point de contrôle (Pc), d'une longueur de la trajectoire de chaque rayon sélectionné et d'un nombre de réflexions dans la trajectoire de chaque rayon sélectionné.

**Patentansprüche**

1. Verfahren zur Bestimmung einer Netzabdeckung an mindestens einem Kontrollpunkt (Pc), der in einer Umgebung liegt, die Umgebung umfassend mindestens eine Sendeantenne (56) eines elektromagnetischen Signals, wobei das Verfahren von einer elektronischen Bestimmungsvorrichtung (10) durchgeführt wird und die folgenden Schritte umfasst:

- Erlangen (110) eines Modells der Umgebung, das Modell umfassend Hindernisse, die geeignet sind, um das elektromagnetische Signal zu reflektieren, die Sendeantenne (56) und den Kontrollpunkt (Pc), wobei jedes Hindernis aus einer Vielzahl von Hindernisteilen (57) gebildet ist,
- Bestimmen (130) einer eigenen Trajektorie für jeden einer Vielzahl von anfänglichen Strahlen, wobei jeder anfängliche Strahl von der Sendeantenne (56) im Modell der Umgebung in eine jeweilige Senderichtung ($\theta$, $\phi$) gesendet wird, wobei mindestens einer aus der Vielzahl von anfänglichen Strahlen an mindestens einem Hindernisteil (57) reflektiert wird,
- für den oder jeden anfänglichen Strahl, dessen Trajektorie eine Beschränkung einhält, die mit dem oder einem der Kontrollpunkte (Pc) assoziiert ist, Berechnen (150) für den oder einen der Kontrollpunkte (Pc) einer Trajektorie eines korrigierten Strahls (RC), der durch den Kontrollpunkt (Pc) und durch die Sendeantenne (56) verläuft,
- die Trajektorie von jedem korrigierten Strahl (RC) umfassend eine korrigierte Senderichtung ($\theta_c$, $\phi_c$),
- Speichern (160) des oder zumindest eines Teils der korrigierten Strahlen (56) und ihrer jeweiligen Trajektorien in einer kumulierten Datenbank,
- für jeden Kontrollpunkt (Pc), wenn die kumulierte Datenbasis mehrere korrigierte Strahlen umfasst, deren korrigierte Senderichtungen ($\theta_c$, $\phi_c$) im Wesentlichen identisch sind, Auswählen (170) nur eines der korrigierten Strahlen (RC), und
- Bestimmen (190) der Netzabdeckung an dem oder jedem Kontrollpunkt (Pc) durch Anwenden eines Modells für Verluste in elektromagnetischen Signalen auf ausgewählte Strahlen aus der kumulierten Datenbasis,

wobei das Verlustmuster von der Anzahl der ausgewählten Strahlen, die den Kontrollpunkt (Pc) erreichen, einer Länge der Flugbahn von jedem ausgewählten Strahl und einer Anzahl von Reflexionen in der Flugbahn von jedem ausgewählten Strahl abhängt.

2. Verfahren nach dem vorherigen Anspruch, umfassend zwischen dem Erlangungsschritt (110) und dem Bestimmungsschritt (130) von Trajektorien:

   - einen Definitionsschritt (120) mehrerer vermaschter Flächen (58) in der Umgebung, wobei jede vermaschte Fläche (58) ein Zellenpflaster aufweist, wobei jede Zelle durch eine Anzahl N von Seiten und durch N Scheitelpunkte begrenzt ist, wobei jeder Scheitelpunkt ein Kontrollpunkt (Pc) ist, und
   - einen Ladeschritt (125) einer Netzfläche (58) aus den Netzflächen in dem Berechnungsschritt (150), wobei die mit jedem Kontrollpunkt (Pc) assoziierte Beschränkung darin besteht, dass der Strahl eine Zelle erreicht, deren einer Scheitelpunkt der Kontrollpunkt (Pc) ist,

   wobei die vermaschten Flächen (58) vorzugsweise eben und bevorzugter parallel zueinander sind.

3. Verfahren nach dem vorherigen Anspruch, wobei der Ladeschritt (130), der Bestimmungsschritt (130) von Trajektorien, der Berechnungsschritt (150) von korrigierten Strahlen, der Speicherschritt (160) und der Auswahlschritt (170) für jede der Maschenflächen (58) iteriert werden.

4. Verfahren nach einem der Ansprüche 2 oder 3, wobei jede Maschenfläche (58) in eine vordefinierte Anzahl von Quadranten unterteilt ist, wobei jeder Kontrollpunkt (Pc) zu einem der Quadranten gehört,
   in dem Speicherschritt (160) der Quadrant, der mit dem Kontrollpunkt (Pc) von jedem korrigierten Strahl assoziiert ist, auch in der kumulierten Datenbank gespeichert wird, und wobei der Auswahlschritt (170) parallel oder nacheinander für jeden Quadranten der kumulierten Datenbasis durchgeführt wird.

5. Verfahren nach einem der vorherigen Ansprüche, wobei für mindestens einen anfänglichen Strahl, der die mit dem oder einem der Kontrollpunkte (Pc) assoziierte Beschränkung einhält, kein entsprechender korrigierter Strahl (RC) die Sendeantenne (56) und den Kontrollpunkt (Pc) in dem Berechnungsschritt (150) verbindet, wobei für diesen anfänglichen Strahl und für diesen Kontrollpunkt (Pc) dann kein korrigierter Strahl (RC) berechnet wird.

6. Verfahren nach einem der vorherigen Ansprüche, wobei der Bestimmungsschritt (130) von Trajektorien, der Berechnungsschritt (170) von korrigierten Strahlen, der Speicherschritt (160) und der Auswahlschritt (170) mehrmals iteriert werden,

   wobei die Senderichtungen ($\theta$, $\phi$) der anfänglichen Strahlen, die in dem Bestimmungsschritt von Trajektorien (130) gesendet werden, von einer Iteration zur anderen verschieden sind, vorzugsweise der Bestimmungs- (130), Berechnungs- (150), Speicher- (160) und Auswahlschritt (170) solange iteriert werden, bis ein Kriterium erreicht ist,
   wobei das Kriterium wie folgt ist:

   - die Anzahl der Iterationen entspricht ein Schwellenwert, und/oder
   - ein Verhältnis zwischen der Anzahl der in dem Auswahlschritt (170) ausgewählten Strahlen und der Anzahl der Strahlen in der kumulierten Datenbank ist größer als oder gleich ein anderer Schwellenwert.

7. Verfahren nach einem der vorherigen Ansprüche, wobei das Verlustmodell derart ist, dass die Netzabdeckung an dem oder einem der Kontrollpunkte (Pc) gleich eine Summe von Beiträgen ist, wobei jeder Beitrag mit einem ausgewählten Strahl der kumulierten Datenbasis verbunden ist,
   wobei jeder Beitrag eine Leistung (Pu) des ausgewählten Strahls ist, die umgekehrt proportional zu der Entfernung ist, die der ausgewählte Strahl von der Sendeantenne (56) zurückgelegt hat, und abhängig von der Anzahl von Reflexionen des ausgewählten Strahls an Hindernisteilen (57) ist.

8. Verfahren nach einem der vorherigen Ansprüche, wobei die elektronische Bestimmungsvorrichtung (10) mindestens eine Grafikkarte (30) umfasst, wobei der Bestimmungsschritt (130) von Trajektorien und der Berechnungsschritt (150) durch die mindestens eine Grafikkarte (30) durchgeführt werden.

9. Computerprogrammprodukt, umfassend Softwareanweisungen, die, wenn sie von einem Computer ausgeführt werden, ein Bestimmungsverfahren nach einem der vorherigen Ansprüche durchführen.

10. Elektronische Bestimmungsvorrichtung (10) einer Netzabdeckung an mindestens einem Kontrollpunkt (Pc), der in einer Umgebung liegt, die Umgebung umfassend mindestens eine Sendeantenne (56) eines elektromagnetischen Signals, die elektronische Bestimmungsvorrichtung (10) umfassend:

- ein Erlangungsmodul (55), das geeignet ist, um ein Modell der Umgebung zu erlangen, das Modell umfassend Hindernisse, die geeignet sind, um das elektromagnetische Signal zu reflektieren, die Sendeantenne (56) und den Kontrollpunkt (Pc),
wobei jedes Hindernis aus einer Vielzahl von Hindernisteilen (57) gebildet ist,
- ein erstes Bestimmungsmodul (65), das geeignet ist, um eine eigene Trajektorie für jeden einer Vielzahl von anfänglichen Strahlen zu bestimmen, wobei jeder anfängliche Strahl von der Sendeantenne (56) im Modell der Umgebung in eine jeweilige Senderichtung ($\theta$, $\phi$) gesendet wird, wobei mindestens einer aus der Vielzahl von anfänglichen Strahlen an mindestens einem Hindernisteil (57) reflektiert wird,
- ein Berechnungsmodul (70), das geeignet ist, um für den oder jeden anfänglichen Strahl, dessen Trajektorie eine mit dem oder einem der Kontrollpunkte (Pc) assoziierte Beschränkung einhält, für den oder einen der Kontrollpunkte (Pc) eine Trajektorie eines korrigierten Strahls (RC) zu berechnen, der durch den Kontrollpunkt (Pc) und durch die Sendeantenne (56) verläuft,
die Trajektorie von jedem korrigierten Strahl (RC) umfassend eine korrigierte Senderichtung ($\theta_c$, $\phi_c$),
- ein Speichermodul (85), das geeignet ist, um den oder zumindest einen Teil der korrigierten Strahlen (56) und ihre jeweiligen Trajektorien in einer kumulierten Datenbank zu speichern,
- ein Auswahlmodul (90), das geeignet ist, um für jeden Kontrollpunkt (Pc), wenn die kumulierte Datenbasis mehrere korrigierte Strahlen mit korrigierten Senderichtungen ($\theta_c$, $\phi_c$) enthält, die im Wesentlichen identisch sind, nur einen der korrigierten Strahlen (RC) auszuwählen, und
- ein zweites Bestimmungsmodul (98), das geeignet ist, um die Netzabdeckung an dem oder jedem Kontrollpunkt (Pc) durch Anwenden eines Modells für Verluste in elektromagnetischen Signalen auf ausgewählte Strahlen aus der kumulierten Datenbasis zu bestimmen,

wobei das Verlustmuster von der Anzahl der ausgewählten Strahlen, die den Kontrollpunkt (Pc) erreichen, einer Länge der Flugbahn von jedem ausgewählten Strahl und einer Anzahl von Reflexionen in der Flugbahn von jedem ausgewählten Strahl abhängt.

## Claims

1. - A method for determining a network coverage in at least one control point (Pc) comprised in an environment, the environment comprising at least one transmitting antenna (56) which transmits an electromagnetic signal, the method being implemented by an electronic determination device (10) and comprising the following steps

- obtaining (110) a model of the environment, the model comprising obstacles suitable for reflecting the electromagnetic signal, the transmitting antenna (56) and the control point (Pc),
each obstacle being formed by a plurality of parts of an obstacle (57),
- determination (130) of a trajectory specific to each of a plurality of initial rays, each initial ray being transmitted from the transmitting antenna (56), in the model of the environment, along a respective direction of transmission ($\theta$, $\phi$), at least one of the plurality of initial rays being reflected on at least one part of obstacle (57),
- for the or each initial ray the trajectory of which obeys a constraint associated with the or one of the control points (Pc), calculation (150) for the or one of said control points (Pc), of a trajectory of a corrected ray (RC) passing through said control point (Pc) and through the transmitting antenna (56),
the trajectory of each corrected ray (RC) comprising a corrected direction of transmission ($\theta_c$, $\phi_c$)

- storage (160) of the or at least part of the corrected rays (56) and the respective trajectory thereof in a cumulative database,
- for each control point (Pc), if the cumulative database comprises a plurality of corrected rays, the corrected directions of transmission ($\theta_c$, $\phi_c$) of which are substantially identical, selection (170) of only one of said corrected rays (RC), and
- determination (190) of the network coverage at the or each control point (Pc) by applying a loss model in electromagnetic signals to the selected rays of the cumulative database,

the loss model depending on the number of selected rays reaching the control point (Pc), a length of the path of each selected ray, and a number of reflections in the path of each selected ray.

2. The method according to the preceding claim, comprising between the obtaining step (110) and the trajectory determination step (130):

- a step (120) of defining a plurality of grid surfaces (58) in the environment, each grid surface (58) having a tiling of cells, each cell being delimited by a number N of sides and by N vertices, each vertex being a control point (Pc), and
- a step of loading (125) a grid surface (58) among the grid surfaces
during the calculation step (150), the constraint associated with each control point (Pc) being that the ray reaches a cell the vertex of which is said control point (Pc),
the grid surfaces (58) being preferably flat, and if not, preferentially parallel to each other.

3. The method according to the preceding claim, wherein the steps of loading (130), of trajectory determination (130), of calculation of corrected ray(s) (150), of storage (160) and of selection (170) are iterated for each of the grid surfaces (58).

4. The method according to any of claims 2 and 3, wherein each grid surface (58) is divided into a predefined number of quadrants, each control point (Pc) belonging to one of the quadrants,

during the storage step (160), the quadrant associated with the control point (Pc) of each corrected ray is also stored in the cumulative database, and
the selection step (170) being performed in parallel, or successively, for each quadrant of the cumulative database.

5. - The method according to any of the preceding claims, wherein, for at least one initial ray complying with the constraint associated with the or one of the control points (Pc), no corresponding corrected ray (RC) connects the transmitting antenna (56) and said control point (Pc),
during the calculation step (150), for this initial ray and for this control point (Pc), no corrected ray (RC) is then calculated.

6. - The method according to any preceding claim, wherein the steps of trajectory determination (130), of calculation of corrected ray(s) (170), of storage (160) and of selection (170) are iterated a plurality of times,

the directions of transmission $(\theta, \phi)$ of the initial rays emitted in the trajectory determination step (130) are distinct from one iteration to another,
preferably, the steps of trajectory determination (130), of calculation (150), of storage (160) and of selection (170) are iterated until a criterion is reached,
the criterion being that:

- the iteration number is equal to a threshold, and/or
- a ratio between the number of rays selected in the selection step (170) and the number of rays in the cumulative database is greater than or equal to another threshold.

7. - The method according to any preceding claim, wherein the loss model is such that the network coverage at the or one of the control points (Pc) is equal to a sum of contributions, each contribution being associated with a selected ray of the cumulative database.
each contribution being a power (Pu) of the selected ray, inversely proportional to the distance traveled by said selected ray from the transmitting antenna (56), and a function of the number of reflections of said selected ray on parts of an obstacle (57).

8. The method according to any of the preceding claims, wherein the electronic determination device (10) comprises at least one graphics card (30), the steps of trajectory determination (130) and of calculation (150) being implemented by the at least one graphics card (30).

9. - A computer program product including software instructions which, when executed by a computer, implement a determination method according to any of the preceding claims.

10. An electronic determination device (10) for determining a network coverage at, at least one control point (Pc) comprised in an environment, the environment comprising at least one transmitting antenna (56) which transmits an electromagnetic signal, the electronic determination device (10) comprising:

- an obtaining module (55) suitable for obtaining a model of the environment, the model comprising obstacles apt to reflect the electromagnetic signal, the transmitting antenna (56) and the control point (Pc), each obstacle being formed by a plurality of parts of obstacle (57),

- a first determination module (65) apt to determine a trajectory specific to each of a plurality of initial rays, each initial ray being transmitted from the transmitting antenna (56), in the model of the environment, along a respective direction of transmission $(\theta, \phi)$, at least one of the pluralities of initial rays being reflected on at least one part of obstacle (57),

- a calculation module (70) apt to calculate, for the or each initial ray the trajectory of which obeys a constraint associated with the or one of the control points (Pc), for the or one of said control points (Pc), of a trajectory of a corrected ray (RC) passing through said control point (Pc) and through the transmitting antenna (56), the trajectory of each corrected ray (RC) comprising a corrected direction of transmission $(\theta_c, \phi_c)$,

- a storage module (85) apt to store the or at least part of the corrected rays (56) and of the respective trajectory thereof in a cumulative database,

- a selection module (90) apt to select, for each control point (Pc), if the cumulative database comprises a plurality of corrected rays, the corrected directions of transmission $(\theta_c, \phi_c)$ of which are substantially identical, only one of said corrected rays (RC), and

- a second determination module (98) apt to determine the network coverage at the or at each control point (Pc) by applying a loss model in electromagnetic signals to the selected rays of the cumulative database,

the loss model depending on the number of selected rays reaching the control point (Pc), a length of the path of each selected ray, and a number of reflections in the path of each selected ray.

EP 4 395 398 B1

GPU

30

50

VRAM

25

CPU

45

RAM

20

10

15

SSD

35

HD

40

| 55 | 60 | 62 | 65 | 67 | 70 | 75 |
| 80 | 85 | 90 | 95 | 97 | 98 | 99 |

FIG.1

EP 4 395 398 B1

FIG.2

**FIG.3**

FIG.4

EP 4 395 398 B1

FIG.5

| Obtention modèle de l'environnement | 110 |

| 120 | Définition de surface dans l'environnement |

| 125 | Chargement d'une surface maillée |

| Détermination trajectoires de rayons émis | 130 |

**140** Respecte contrainte ? — OUI

| Calcul trajectoire(s) rayon(s) corrigé(s) | 150 |

| Stockage rayon(s) corrigé(s) dans base de donnés temporaire | 155 |

| Présélection rayon(s) corrigé(s) | 157 |

| Stockage rayon(s) corrigé(s) présélectionné(s) dans base de données cumulées | 160 |

| Sélection rayon(s) corrigé(s) présélectionné(s) | 170 |

**180** NON — Critère atteint ? — OUI

**185** OUI / Toutes surfaces traitées ? — NON

| 190 | Détermination couverture réseau |

| 195 | Affichage |

<u>FIG.6</u>

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20150333849 A1

**Littérature non-brevet citée dans la description**

• **LING, H** ; **CHOU, R-C** ; **LEE, S-W**. Shooting and Bouncing Rays: Calculating the RCS of an Arbitrarily Shaped Cavity. *IEEE Transactions on Antennas and Propagation*